# EUROPÄISCHE PATENTSCHRIFT

(11) **EP 1 372 821 B1**
(45) Veröffentlichungstag und Bekanntmachung des Hinweises auf die Patenterteilung: **18.01.2006**
(21) Anmeldenummer: 02740447.4
(22) Anmeldetag: 05.04.2002
(51) Int. Cl.: B01D 53/14, C01C 1/04, B01D 53/22

(54) **VERFAHREN ZUR ABSORPTIVEN AUSSCHLEUSUNG VON AMMONIAK UND METHAN AUS SYNTHESEGAS**
METHOD FOR THE ABSORPTIVE OUTWARD TRANSFER OF AMMONIA AND METHANE OUT OF SYNTHESIS GAS
PROCEDE DE TRANSFERT VERS L'EXTERIEUR D'AMMONIAC ET DE METHANE CONTENUS DANS DU GAZ DE SYNTHESE

(30) Priorität: 05.04.2001 DE 10116958
(43) Veröffentlichungstag der Anmeldung: 02.01.2004
(73) Patentinhaber: Uhde GmbH, 44141 Dortmund (DE)
(72) Erfinder: WYSCHOFSKY, Michael, 44135 Dortmund (DE); LIU, Vincent, 44795 Bochum (DE)
(86) Internationale Anmeldenummer: PCT/EP2002/003812
(87) Internationale Veröffentlichungsnummer: WO 2002/081060

(56) Entgegenhaltungen:
- EP-A- 0 770 420
- EP-B- 0 751 815
- WO-A-90/08736
- DD-A- 135 372

## Beschreibung

Die Erfindung betrifft ein Verfahren zur absorptiven Ausschleusung von NH₃ und CH₄ aus einem zumindest NH₃, H₂, N₂ und CH₄ enthaltenden Gas unter hohem Druck (über 50 bar absolut), im folgenden als Synthesegas bezeichnet. NH₃ enthaltendes Synthesegas findet sich vor allem in Prozessen zur Erzeugung von NH₃ aus Synthesegas, wobei bekanntlich die Umsetzung zu NH₃ bei den für solche Verfahren üblichen Temperaturen, Drücken und Katalysatoren nur unvollständig verläuft, und das aus Synthesegas erzeugte NH₃ aus einem Restgasstrom abgeschieden werden muss. Die Erfindung ist jedoch nicht auf diesen Anwendungsfall beschränkt.

Übliche Anlagen zum Erzeugen von NH₃ aus Synthesegas werden als unter hohem Druck stehende Kreislaufsysteme ausgeführt. Hierbei wird das Synthesegas, bestehend aus H₂, N₂ und inerten Gasbestandteilen, darunter CH₄, zunächst auf einen hohen Druck verdichtet und danach in ein Reaktorsystem eingeleitet, wo ein Teil, etwa zwischen 10 und 20 %, des Synthesegases zu NH₃ umgesetzt wird. Das nach dem Reaktorsystem erhaltene Gasgemisch wird mittels Kühlwasser soweit abgekühlt, dass ein möglichst großer Anteil des gebildeten NH₃ auskondensiert und flüssig abgezogen werden kann. Um weiteres NH₃ aus dem restlichen Gasgemisch auszukondensieren, muss auf weit tiefere Temperaturen abgekühlt werden, was eine aufwändige Kälteerzeugung erfordert. Um diesen Aufwand auf ein ökonomisch tragbares Maß zu begrenzen, wird das NH₃ daher nur bis auf einen Restgehalt von ca. 4 mol-% im Restgas abgeschieden.

So liegt z. B. für eine Produktkonzentration von 20 mol-% bei einem Synthesedruck von 200 bar der Taupunkt des NH₃ bei ca. 57 °C. Durch eine Wasserkühlung auf z. B. 35 °C lässt sich der NH₃-Gehalt im Gas bis auf 11,2 mol-% senken und damit bereits 59 % der auskondensierbaren Produktmenge gewinnen. Da das Kreislaufgas, das zum Reaktor zurückgeführt wird, eine möglichst geringe NH₃-Konzentration, in diesem Beispiel 3,8 mol-%, aufweisen sollte, wird in der Regel ein zusätzlicher Tiefkühlkreislauf der Wasserkühlung nachgeschaltet, um mit noch niedrigeren Temperaturen (z. B. Kühlung auf -10 °C bis 0 °C) weiteres Produkt auszukondensieren.

Im Anschluss an die Abscheidung des NH₃ findet in Kreislauf-Syntheseanlagen eine kontinuierliche Ausschleusung eines Spülstromes statt, womit man eine Anreicherung des Kreislaufes mit gegenüber der NH₃-erzeugenden Reaktion inerten Gasbestandteilen, also z.B. CH₄ welche mit dem frischen Synthesegas eingetragen werden, verhindert. Aus dem ausgeschleusten Spülstrom müssen noch restliches NH₃ sowie wertvolle Bestandteile des Synthesegases abgeschieden werden, wobei letztere nach Rückverdichtung wieder in den Synthesekreislauf eingespeist werden können. Hinter der Ausschleusung des Spülstromes wird der Kreislauf geschlossen, indem ein Kreislaufverdichter den Druckverlust des Kreislaufes ausgleicht, und der Verlust an Synthesegas durch die Reaktion mittels Zumischung des frischen Synthesegases zum Kreislauf-Synthesegas ausgeglichen wird.

Nachteilig ist in diesem System jedoch zum einen, dass z. B. bei 180 bar Synthesedruck die Abscheidung von NH₃ nur bis auf einen Restgehaft von ca. 4 Mol % wirtschaftlich erfolgen kann. In dem Reaktionssystem, welches innerhalb eines Synthesekreislaufes oder auch einem Frischgas-Reaktionssystem der NH₃₋Abscheidung stromabwärts angeordnet ist, wird dieser Restgehalt im wesentlichen gleich der NH₃-Eintrittskonzentration, eine dazwischen stattfindende Verdünnung durch die Zumischung von frischem Synthesegas verändert die NH₃-Eintrittskonzentration nur unwesentlich. Im Vergleich zu NH₃-freiem Synthesegas lassen sich mit ca. 4 Mol % NH₃-Eintrittskonzentration nur ca. 4/5 der möglichen NH3-Ausbeute pro Kreislauf-Durchlauf erreichen.

Nachteilig ist ferner, dass aus dem ausgeschleusten Spülstrom noch NH₃ in aufwändiger Weise abgeschieden werden muss, wenn dieser nicht verworfen werden soll. Je größer der Spülstrom gewählt wird, desto größer sind auch die abzuscheidenden Mengen an NH₃. Wird der Spülstrom jedoch klein gehalten, reichem sich die inerten Bestandteile, wie z.B. CH₄, im Kreislauf-Synthesegas an und deren Partialdruck verringert die Ausbeute im Reaktionssystem sowie den Anteil des danach mittels Kühlwasser abscheidbaren NH₃.

Die oben genannten Eigenschaften gelten sinngemäß auch für Anlagen zur Erzeugung von NH₃, die nicht als Kreislaufsysteme betrieben werden, etwa, weil das nicht zu NH₃ umgesetzte Synthesegas nachfolgend für andere Synthesen genutzt werden soll. Auch hier besteht das Bedürfnis, NH₃ möglichst weitgehend aus dem Synthesegas nach dem Reaktionssystem abzuscheiden und den Inertengehalt klein zu halten.

Es besteht also seit langem ein großes Interesse der Industrie, NH₃ aus Synthesegas wirtschaftlich bis auf kleinste Restmengen hin abzuscheiden. Hierzu wurden auch eine Reihe von Versuchen unternommen, NH₃ auszuwaschen. Als Lösungsmittel wurden meist wässerige Lösungen verwendet. Hierbei ergab sich aber zum einen das Problem, das darin gelöste NH₃ wieder aus der wässerigen Lösung abzutreiben, zum anderen, zu verhindern, das sich Bestandteile der wässerigen Lösung während des Waschvorgangs in das Synthesegas verflüchtigen und dort in den nachgeschalteten Einrichtungen betriebliche Probleme, beispielsweise Katalysatorvergiftung, verursachen. Aus diesem Grund verfestigte sich das technische Vorurteil, dass das gebildete NH₃ nicht wirtschaftlich und betriebssicher aus dem Synthesegas ausgewaschen werden könne. Femer bestand auch seit langem ein Interesse daran, inerte Bestandteile wie CH₄ aus dem Synthesekreislauf selektiv zu entfemen, um den erforderlichen Spülstrom möglichst klein zu halten.

Es wurde auch beschrieben, z. B. in der Schrift DE OS 1 924 892, das NH₃ aus dem die Konvertierzone verlassenden Gasgemisch mittels eines schwerflüchtigen, organischen Lösungsmittels zu absorbieren und das absorbierte NH₃ nach Regeneration des Lösungsmittels zu gewinnen. Als Lösungsmittel wurden diverse Alkylenglykole vorgeschlagen. Aufgrund betrieblicher Probleme und den damit verbundenen wirtschaftlichen Nachteilen konnte sich dieses Verfahren jedoch während über 30 Jahren nicht auf dem Markt durchsetzen. Ein weiteres Verfahren dieser Art wird in der Schrift WO 90/08736 A1 vorgestellt, aufgrund wirtschaftlicher Nachteile beim Einsatz in NH₃₋Syntheseanlagen, die im Kreislauf bei einem Druck oberhalb von 100 bar betrieben werden, konnte sich jedoch auch dieses Verfahren nicht durchsetzen. Es ist aus der Schrift DD 135 372 auch bekannt, NH₃ aus Abluft bzw. Desorptionsabgas mittels organischen Flüssigkeiten wie Ethylenglykol, Di- oder Triethylenglykol, deren Mono- oder Dimethylether, sowie Mischungen daraus, welche auch bis zu 20 % Wasser enthalten können, auszuwaschen.

Die Aufgabe der Erfindung ist es daher, die oben genannten Nachteile zu überwinden und ein bei beliebig hohen Betriebsdrücken besonders wirtschaftliches Verfahren zur Ausschleusung von NH₃ und CH₄ aus Synthesegas zur Verfügung zu stellen.

Die Erfindung löst die Aufgabe dadurch, dass mittels eines schwersiedenden, physikalisch wirkenden und regenerierbaren Lösungsmittels, welches Homologe der Alkylenglykol-alkyl-ether enthält und auch Wasser enthalten kann, die Komponenten NH₃, H₂, N₂ und CH₄ aus dem Synthesegas absorbiert und in mindestens zwei weiteren Verfahrensschritten bei unterschiedlichen Drücken aus dem beladenen Lösungsmittel wieder abgetrieben werden, wobei mindestens eine NH₃-reiche und mindestens eine CH₄-reiche Gasfraktion aus dem Lösungsmittel abgezogen werden. Dadurch wird das Lösungsmittel regeneriert. Als schwersiedend wird dabei ein Lösungsmittel verstanden, dessen Dampfdruck unter den gewählten Prozessbedingungen derart gering ist, dass eine Kontamination des Synthesegases sicher ausgeschlossen werden kann. Physikalisch wirkend ist es dann, wenn es keine chemische Verbindungen mit dem NH₃ eingeht. Regenerierbar ist das Lösungsmittel dann, wenn das Lösungsmittel und NH₃ ein weitsiedendes binäres System darstellen.

Da das Lösungsmittel regeneriert wird, ist es möglich und sinnvoll, das Absorptionsverfahren in einem geschlossenen Kreislauf zu betreiben. Homologe der Alkylenglykol-alkyl-ether besitzen gegenüber anderen Lösungsmitteln, z.B. Glykolen, überdies den Vorteil, dass sie sehr reaktionsträge sind und daher nicht mit den abzuscheidenden Stoffen oder sonstigen Synthesegaskomponenten reagieren sowie außerdem nur eine sehr geringe Viskosität aufweisen, wodurch zum einen der Stoffübergang in der Absorption in verbessert wird und zum anderen Pumpenergie eingespart werden kann.

Das Verfahren eignet sich besonders zur Ausschleusung von NH₃ und CH₄ in Anlagen zur Erzeugung von Ammoniak, da sich in einem Absorptionsschritt sowohl das erzeugte Produkt als auch das sich sonst innerhalb eines Synthesekreislaufes anreichemde CH₄ fast vollständig aus dem Synthesegas ausschleusen lassen. Gegenüber dem herkömmlichen Stand der Technik ergibt sich dadurch der große Vorteil, dass bei gleichem Betriebsdruck die Partialdrücke der Ausgangsstoffe angehoben werden, was zu verbesserter Ausbeute führt, und außerdem nur ein erheblich kleinerer Spülstrom erforderlich wird, wodurch Anlagen- und Betriebskosten gespart werden können.

Der Absorptionsvorgang findet wahlweise bei Temperaturen im Bereich von -30 °C bis +50 °C statt, wobei für jede dieser Temperaturen ein jeweils dafür geeignetes Lösungsmittel aus der Gruppe der Homologen der Alkylenglykol-alkyl-ether zum Einsatz kommt, und wobei dem Lösungsmittel Wasser hinzugesetzt werden kann. Besonders bevorzugt findet der Absorptionsvorgang im Bereich von 0 °C bis +40 °C statt, besonders dann, wenn das erfindungsgemäße Verfahren innerhalb einer Anlage zur Erzeugung von NH₃ genutzt wird.

Der Absorptionsvorgang kann sowohl in einer herkömmlichen Wäsche durchgeführt werden, wobei das flüssige Lösungsmittel direkt mit dem Synthesegas in Kontakt gebracht wird als auch in Vorrichtungen, in denen das Lösungsmittel nicht direkt mit dem Synthesegas in Kontakt gebracht wird. In einer weiteren Ausgestaltung der Erfindung wird der Absorptionsvorgang in einem Kontaktor durchgeführt, welcher eine geeignete Membran enthält, welche die Gasseite von der Flüssigseite trennt, wobei die Gasbestandteile die Membran passieren können, das Lösungsmittel jedoch nicht, und wobei das Lösungsmittel nicht direkt mit dem Synthesegas in Kontakt gebracht wird. Hierbei ist besonders vorteilhaft, dass eine solche Verfahrensweise sicher verhindert, dass Lösungsmittel in das Synthesegas gelangen kann, wobei sich die Anforderungen an den Dampfdruck des Lösungsmittels gegenüber einer Wäsche entsprechend verringern und sich die Viskositäten und NH₃-Löslichkeit sowie CH₄-Löslichkeit des Lösungsmittels verbessern lassen. Femer ist vorteilhaft, dass über Membranen eine erheblich größere Kontaktoberfläche, bezogen auf das Bauvolumen, bereitgestellt werden kann, als dies bei Verfahren, die direkten Kontakt des Synthesegases mit dem Lösungsmittel herstellen, möglich ist. Zweckmäßigerweise wird die Membran in einem oder mehreren als Modulen ausgeführten Kontaktoren angeordnet und als Kapillaren ausgebildet, in denen das Lösungsmittel fließt. Gegenüber bekannten Lösungsmitteln für Membrankontaktoren, wie sie z.B. aus der Schrift EP 0 751 815 B1 bekannt sind, haben die Homologe der Alkylenglykol-alkyl-ether den großen Vorteil geringer Viskosität, was die wirtschaftliche Förderung durch Kapillaren erst ermöglicht und ein Vorteil der Erfindung ist.

In einer weiteren Ausgestaltung der Erfindung wird die Regeneration des Lösungsmittels in mindestens drei Verfahrensschritten durchgeführt. Hierbei ist es bei Anwendung in einer Anlage zur Erzeugung von NH₃ aus Synthesegas von Vorteil, wenn zunächst mindestens drei Verfahrensschritte, in denen durch Absenkung des Betriebsdruckes und optional Erhöhung der Betriebstemperatur des Lösungsmittels, ein Ausgasen gelöster Gase bewirkt wird, im folgenden als Flashstufen bezeichnet, darauf nachfolgend ein Rektifikationsschritt und nachfolgend ein weiterer, nicht oberhalb Atmosphärendruck betriebener Regenerationsschritt durchlaufen wird. In der ersten Flashstufe wird das beladene Lösungsmittel auf einen Druck entspannt, bei dem ein H₂-reiches Gas aus dem Lösungsmittel ausdampft. In der zweiten Flashstufe wird weiter auf einen Druck entspannt, bei dem ein CH₄-reiches Gas ausdampft. Ab der dritten Flashstute wird weiter auf einen Druck entspannt, bei dem NH₃-Dampf ausdampft. Auf diese Weise lassen sich 3 separate Gasströme erzeugen, was ein Vorteil der Erfindung ist. Der H₂-reiche Gasstrom lässt sich dabei beispielsweise in das NH₃-Synthesesystem zurückspeisen oder zu Heizzwecken nutzen und der CH₄-reiche Strom beispielsweise in die Anlage zur Erzeugung von NH₃-Synthesegas zurückspeisen oder zu Heizzwecken nutzen.

Die weitere Regeneration des Lösungsmittels oder eines Teilstromes des Lösungsmittels erfolgt durch thermische Regeneration als Rektifikation, vorzugsweise in zwei Schritten, zunächst unter gegenüber dem Atmosphärendruck erhöhtem Druck, so dass der Brüden der Kolonne wirtschaftlich kondensierbar ist, und nachfolgend unter atmosphärischem Druck oder Teilvakuum. Hierbei ist es vorteilhaft, den Brüden derart zu verdichten, dass er gemeinsam mit dem Brüden der vorangegangenen Regenerationsschritte kondensiert werden kann. Dieser letzte, im Teilvakuum durchgeführte Regenerationsschritt kann alternativ auch als Flashstufe ausgeführt werden. In einer weiteren Ausgestaltung der Erfindung wird der desorbierte NH₃-Dampf auf die Saugseite eines Kältemittelverdichters geführt. Das im Kälteverdichter erzeugte flüssige NH₃ wird als Rückfluss für den vorangegangenen Rektifikationsschritt verwendet.

Bei der Zufuhr von Wärme in die Flashstufen erreicht man eine größere Ausdampfung des NH₃ aus dem Lösungsmittel. Hierzu ist vorteilhaft, Niedrigtemperaturwärme, insbesondere Abwärme aus anderen Prozessschritten, zu nutzen. Es ist auch möglich, Flashstufen in geteilter Weise auszuführen, d.h. in einem ersten Schritt nur den Druck abzusenken und in einem zweiten Schritt die Temperatur anzuheben.

In einer weiteren Ausgestaltung der Erfindung wird der verdichtete NH₃₋Dampf mit flüssigem NH₃ aus einer Kälteanlage gewaschen und anschließend in eine der kalten Flashstufen zurückgeführt. Hierdurch wird erreicht, dass Lösungsmittelverluste vermieden werden. Die hierfür erforderliche Kälteanlage kann auch vorteilhaft in das Regenerationsverfahren integriert werden.

In einer weiteren Ausgestaltung der Erfindung wird die Regeneration des Lösungsmittels durch Strippung mit Inertgas erreicht. Als Strippmedium kommen die Entspannungsgase des eigenen Prozesses oder Heizgase der dem NH₃-Syntheseprozess vorgeschalteten Synthesegaserzeugung oder Dampferzeugung in Betracht.

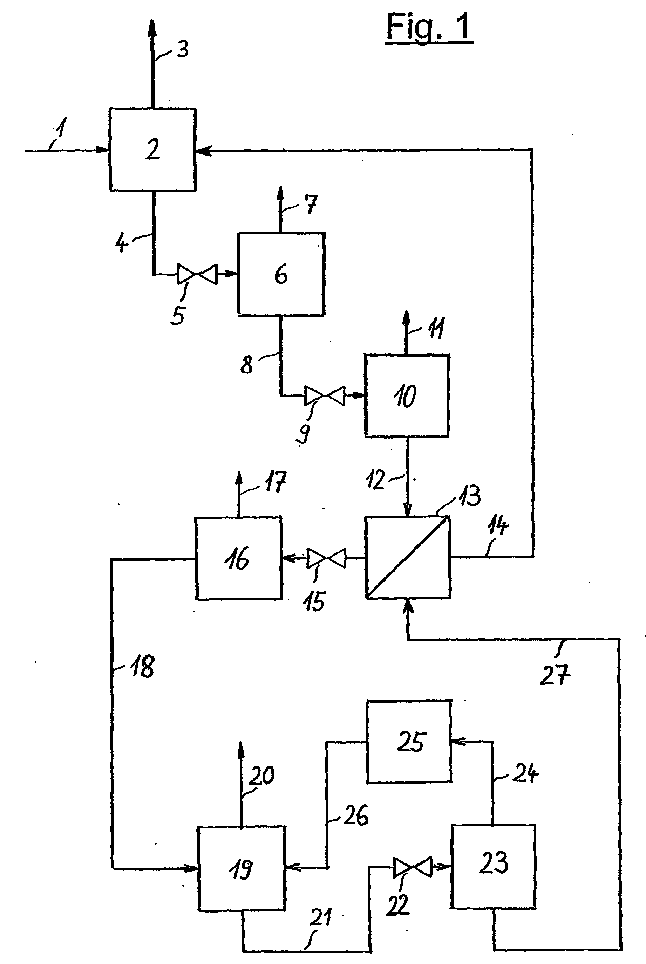

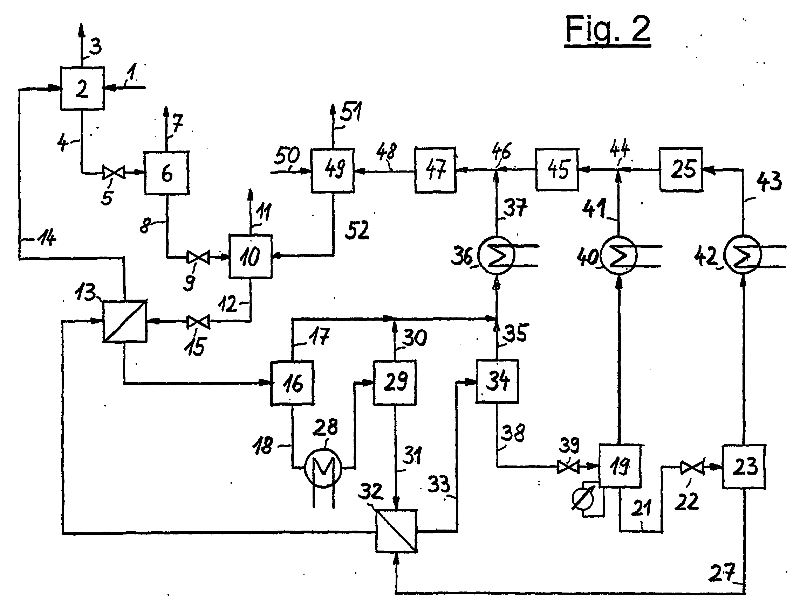

Die Erfindung wird nachstehend beispielhaft anhand von 3 Verfahrensskizzen, die das erfindungsgemäße Verfahren darstellen, näher erläutert. Fig. 1 zeigt das erfindungsgemäße Verfahren mit einem Absorptionsschritt, mehreren Druckentspannungen und einer Möglichkeit zur Regeneration des Lösungsmittels durch mehrstufige Desorption. Hierbei ist es möglich, die NH₃-Absorption an verschiedenen Stellen eines NH₃-Herstellungsprozesses vorzusehen, wobei auch mehrere Absorptionsvorrichtungen in einer einzigen Anlage möglich sind. Die Darstellung nur eines einzigen Absorptionsschrittes wie in Fig. 1 und 2 ist daher so zu verstehen, dass auch mehrere Absorptionsstufen in einer Anlage vorhanden sein können, und dass in solchen Fällen die Regeneration des Lösungsmittels und die NH₃₋Gewinnung im Sinne der Erfindung auch gemeinsam für alle Absorptionsstufen erfolgen kann.

NH₃-reiches Synthesegas 1, welches unter einem Druck von ca. 180 bar (absolut) wird in eine Absorptionsstufe 2 eingeleitet, wo das NH₃ von einem Lösungsmittel absorbiert wird. Das NH₃-arme Synthesegas 3 wird aus der Absorptionsstufe 2 in eine hier nicht dargestellte, nachfolgende Einheit weitergeleitet. Das beladene Lösungsmittel 4 wird in einer Druckreduzierung 5 auf einen Druck von 60 bar (absolut) reduziert und in eine H₂-Ausgasungsstufe 6 geführt. Dort gast ein H₂-reiches Abgas 7 aus dem Lösungsmittel aus. Dieses H₂-reiche Abgas 7 kann entweder dem Synthesegas beigemischt oder zu Heizzwecken verwendet werden. Das beladene Lösungsmittel 8 wird in einer weiteren Druckreduzierung 9 auf einen Druck von 12 bar (absolut) reduziert und in eine CH₄-Ausgasungsstufe 10 geführt. Dort gast ein CH₄-reiches Abgas 11 aus dem Lösungsmittel aus. Dieses CH₄-reiche Abgas 11 kann entweder dem Einsatzgas für einen der Synthesegaserzeugung dienenden Reformierprozess beigemischt oder zu Heizzwecken verwendet werden. Das beladene Lösungsmittel 12 wird in einem Wärmeverschiebungssystem 13 gegen regeneriertes Lösungsmittel 14 aufgeheizt, und in einer weiteren Druckreduzierung 15 auf einen Druck von 10 bar (absolut) reduziert, und in eine NH₃-Ausgasungstufe 16 geführt. Dort gast ein NH₃-reiches Abgas 17, woraus NH₃ gewonnen wird, aus dem Lösungsmittel aus.

Das noch beladene Lösungsmittel 18 wird einer Druckdesorptionsstufe 19 zugeführt, die beispielsweise als Rektifikationskolonne ausgeführt werden kann. Hierbei fällt desorbiertes NH₃-Kondensat 20 als Kopfprodukt an. Das teilregenerierte Lösungsmittel 21, welches als Sumpfprodukt anfällt, wird in einer Druckreduzierung 22 auf einen Druck von 1 bar (absolut) reduziert und in eine Niederdruckdesorptionsstufe 23 geleitet, die ebenfalls als Rektifikationskolonne ausgeführt werden kann. Das hierbei ausgetriebene NH₃ wird über eine NH₃-Dampf-Rückführung 24, eine Verdichtung 25 und eine NH₃-Rückführung 26 wieder in die Niederdruckdesorptionsstufe 23 gegeben. Eine besonders vorteilhafte, apparative Realisierung besteht dabei darin, die Brüden der als Niederdruckdesorptionsstufe dienenden Rektifikationskolonne direkt auf die Saugseite eines Kältemittelverdichters zu geben, das gewonnene flüssige NH₃ als Rücklauf zu nutzen, und somit gleichzeitig die Funktion der Verdichtung 25 und der Kopfproduktkühlung der als Niederdruckdesorptionsstufe 23 dienenden Rektifikationskolonne zu erfüllen. Das regenerierte Lösungsmittel 27 gibt seine Wärme im Wärmeverschiebungssystem 13 ab und kann danach als regeneriertes Lösungsmittel 14 wieder in der Absorptionsstufe 2 zum Einsatz kommen.

Fig. 2 zeigt das erfindungsgemäße Verfahren mit weiteren Ausgestaltungen, gegenüber Fig. 1 insbesondere weiteren NH₃-Ausgasungsstufen, einer Lösungsmittelrückgewinnung aus ausgegastem NH₃ und einer Entkopplungsmöglichkeit der Regeneration des Lösungsmittels. Die Beschreibung der Bezugszeichen 1 bis 17 gilt für Fig. 2 analog zu Fig. 1, wobei lediglich die Druckreduzierung 15 vor der Wärmeverschiebung 13 vorgesehen wird. Hierdurch wird eine apparative Zusammenlegung beider Verfahrensstufen vereinfacht, der Fachmann wird im Einzelfall die jeweils günstigere Variante auswählen.

Das beladene Lösungsmittel 18 wird in einer Wärmezufuhr 28 erwärmt, wobei vorzugsweise Abwärme aus anderen Prozessen eingesetzt wird. Hierdurch verschiebt sich das Lösungsgleichgewicht und weiteres NH₃ gast in der nachfolgenden NH₃-Ausgasung 29 aus. Das ausgasende NH₃-reiche Gas 30 wird zweckmäßigerweise mit dem NH₃-reichen Gas 17 zusammengeführt. Das beladene Lösungsmittel 31 kann in einer weiteren Wärmeverschiebung 32 gegen regeneriertes Lösungsmittel 27 weiter erwärmt werden, so dass sich das Lösungsgleichgewicht noch weiter verschiebt und weiteres NH₃ in der nachfolgenden NH₃-Ausgasung 34 ausgast, wobei das dabei ausgasende NH₃-reiche Gas 35 ebenfalls mit dem NH₃-reichen Gas 17 und/ oder 30 zusammengeführt werden kann. Hierbei handelt es sich im Zusammenhang gesehen dann um eine mehrstufige Wärmeverschiebung vom regenerierten Lösungsmittel zum beladenen Lösungsmittel mit zusätzlicher Wärmezufuhr, bei der die Wärmezufuhr im Einzelfall je nach den lokalen Gegebenheiten, insbesondere den zur Verfügung stehenden Wärmequellen auch an geeigneter anderer Position erfolgen kann.

Das aus den NH₃-Ausgasungen 16, 29 und 34 erhaltene und aus 17, 30 und 35 zusammengeführte NH₃-reiche Gas wird vor seiner Verdichtung noch in der Kühlung 36 bis an den NH₃-Taupunkt abgekühlt. Der erhaltene NH₃-Dampf 37 enthält außer NH₃ noch geringe Mengen an CH₄, H₂ und verdampftem Lösungsmittel.

Das beladene Lösungsmittel 38 wird aus der NH₃-Ausgasung 34 über gegebenenfalls eine weitere Druckreduzierung 39 in die Druckdesorptionsstufe 19 geleitet, welche in dem in Fig. 2 dargestellten Beispiel als reine Abtriebssäule ausgeführt ist. Hierbei fällt dampfförmiges NH₃, welches mit Lösungsmittel verunreinigt ist, an. Das teilregenerierte Lösungsmittel 21, wird aus dem Sumpf abgezogen, in einer Druckreduzierung 22 weiter im Druck reduziert und in die Niederdruckdesorptionsstufe 23 geleitet, wo das restliche NH₃ als NH₃-Dampf 41 aus dem Lösungsmittel ausgetrieben wird. Das regenerierte Lösungsmittel 27 kann nun über die beiden Wärmeverschiebungssysteme 32 und 13 zur Absorptionsstufe 2 zurückgeführt werden, wodurch der Lösungsmittelkreislauf geschlossen wird.

Im Gegensatz zum dem in Fig. 1 dargestellten Beispiel sind die im Beispiel von Fig. 2 in den beiden Desorptionsstufen 19 und 23 ausgetriebenen NH₃-Dämpfe wie auch in geringerem Maße das ausgegaste NH₃-reiche Gas der Ausgasungen 16, 29 und 34 noch mit Lösungsmittel verunreinigt, welches im fertigen NH₃-Produkt nicht erwünscht ist und daher noch entfemt werden muss. Dies geschieht erfindungsgemäß nach der Vereinigung der NH₃-führenden Dampfströme 43, 41 und 37 jeweils nach entsprechender Kühlung 42, 40 und 36 sowie nachfolgender Verdichtungen 25 und 45 sowie entsprechenden Zusammenführungen 44 und 46, wobei es vorteilhaft sein kann, in einer weiteren Verdichtung 47 einen Druck einzustellen, der eine leichte Verflüssigung des NH₃-Dampfes 48 bei nicht allzu tiefen Temperaturen ermöglicht. Die Auswaschung der Lösungsmittel-Verunreinigungen geschieht in der Nachwäsche 49, in der flüssiges NH₃ 50 als Waschmittel dient. Der gereinigte NH₃-Dampf 51 verlässt die Nachwäsche, die als Kolonne mit wenigen Böden ausgeführt werden kann, über Kopf und kann direkt einer weiteren Verwendung oder einer Kälteanlage zur Herstellung von Flüssig-NH₃ zugeführt werden. Das in der Nachwäsche 49 erhaltene flüssige NH₃-Lösungsmittel-Gemisch 52 wird der CH₄-Ausgasungsstufe 10 oder dem beladenen Lösungsmittel 12 beigemischt und gelangt auf diese Weise wieder zurück in den Lösungsmittelkreislauf, wodurch sich die Lösungsmittelverluste erheblich reduzieren lassen. Als weiterer Vorteil dieser erfindungsgemäßen Verfahrensschaltung wird die Druckstabilität des Regenerationssystems verbessert.

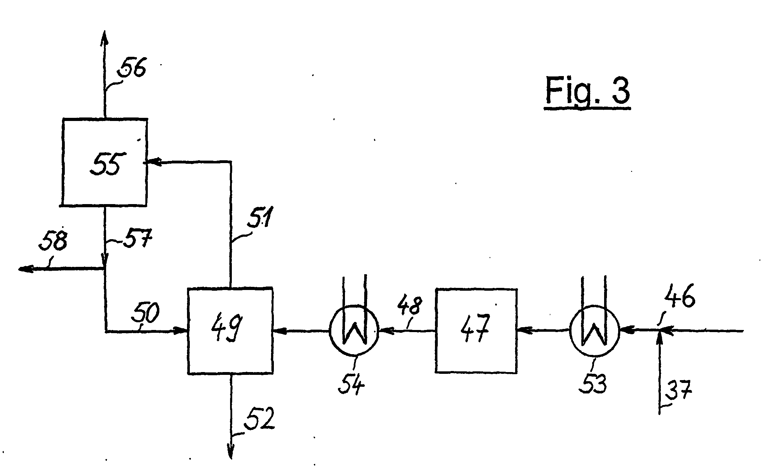

Fig. 3 zeigt eine Ausgestaltung des erfindungsgemäßen Verfahrens, welches an Fig. 2 anschließt. Hierbei findet die Herstellung des flüssigen NH₃, welches das Lösungsmittel aus dem verunreinigten NH₃-Dampf auswäscht, in einer angeschlossenen Kondensation statt.

Der NH₃-Dampf nach der Zusammenführung 46 wird vor seiner Verdichtung 47 in der Kühlung 53 so weit wie ohne Gefahr für den Verdichter möglich gekühlt und der verdichtete NH₃-Dampf wird in der Kühlung 54 nochmals nachgekühlt, möglichst bis der NH₃-Taupunkt erreicht, aber nicht überschritten wird. In der Nachwäsche 49 wird der Waschvorgang wie im Beispiel für Fig. 2 beschrieben durchgeführt, der NH₃-Dampf 51 wird jedoch in einen NH₃-Kondensator 55 geleitet, wo NH₃ praktisch vollständig auskondensiert wird. In geringen Mengen noch vorhandene, nicht kondensierbare Gase, wie vor allem CH₄, werden als CH₄-reiches Abgas 56 abgezogen. Das kondensierte, flüssige NH₃ 57 wird überwiegend als flüssiges Produkt- NH₃ 58 abgezweigt, der Rest des flüssigen NH₃ 50 dient als Waschflüssigkeit in der Nachwäsche 49.

### Bezugszeichenlegende:

- 1: NH₃-reiches Synthesegas
- 2: Absorptionsstufe
- 3: NH₃-armes Synthesegas
- 4: beladenes Lösungsmittel
- 5: Druckreduzierung
- 6: H₂-Ausgasungsstufe
- 7: H₂-reiches Abgas
- 8: beladenes Lösungsmittel
- 9: Druckreduzierung
- 10: CH₄-Ausgasungsstufe
- 11: CH₄-reiches Abgas
- 12: beladenes Lösungsmittel
- 13: Wärmeverschiebung
- 14: regeneriertes Lösungsmittel
- 15: Druckreduzierung
- 16: NH₃-Ausgasung
- 17: NH₃-reiches Gas
- 18: beladenes Lösungsmittel
- 19: Druckdesorptionsstufe
- 20: NH₃-Kondensat
- 21: teilregeneriertes Lösungsmittel
- 22: Druckreduzierung
- 23: Niederdruckdesorptionsstufe
- 24: NH₃-Dampf-Rückführung
- 25: Verdichtung
- 26: NH₃-Rückführung
- 27: regeneriertes Lösungsmittel
- 28: Wärmezufuhr
- 29: NH₃-Ausgasung
- 30: NH₃-reiches Gas
- 31: beladenes Lösungsmittel
- 32: Wärmeverschiebung
- 33: beladenes Lösungsmittel
- 34: NH₃-Ausgasung
- 35: NH₃-reiches Gas
- 36: Kühlung
- 37: NH₃-Dampf
- 38: beladenes Lösungsmittel
- 39: Druckreduzierung
- 40: Kühlung
- 41: NH₃-Dampf
- 42: Kühlung
- 43: NH₃-Dampf
- 44: Zusammenführung
- 45: Verdichtung
- 46: Zusammenführung
- 47: Verdichtung
- 48: NH₃-Dampf
- 49: Nachwäsche
- 50: Flüssiges NH₃
- 51: NH₃-Dampf
- 52: NH₃-Lösungsmittel-Gemisch
- 53: Kühlung
- 54: Kühlung
- 55: NH₃-Kondensator
- 56: CH₄-reiches Abgas
- 57: flüssiges NH₃
- 58: flüssiges Produkt-NH₃

## Patentansprüche

1. Verfahren zur absorptiven Ausschleusung von NH₃ und CH₄ aus einem zumindest NH₃, H₂, N₂ und CH₄ enthaltenden Gas (1) unter hohem Druck, **dadurch gekennzeichnet, dass** mittels eines schwersiedenden, physikalisch wirkenden und regenerierbaren Lösungsmittels, welches Homologe der Alkylenglykol-alkyl-ether enthält und auch Wasser enthalten kann, die Komponenten NH₃, H₂, N₂ und CH₄ aus besagtem Gas absorbiert und in mindestens zwei weiteren Verfahrensschritten bei unterschiedlichen Drucken aus dem beladenen Lösungsmittel wieder abgetrieben werden, wobei mindestens eine NH₃₋reiche Gasfraktion (17) und mindestens eine CH₄-reiche Gasfraktion (11) aus dem Lösungsmittel abgezogen werden.

2. Verwendung des Verfahrens gemäß Anspruch 1 in einer Anlage zur Herstellung von Ammoniak.

3. Verfahren nach einem der Ansprüche 1 oder 2, **dadurch gekennzeichnet, dass** der Absorptionsvorgang im Bereich von -30 °C bis +50 °C und besonders bevorzugt im Bereich von 0 °C und +40 °C stattfindet.

4. Verfahren nach einem der Ansprüche 1 oder 2, **dadurch gekennzeichnet, dass** die Absorption in mindestens einem Kontaktor oder Modulen von Kontaktoren vorgenommen wird, bei der das Lösungsmittel von dem direkten Kontakt mit dem Gas, welches zumindest NH₃, H₂, N₂ und CH₄ enthält, durch eine dazwischen angeordnete Membran daran gehindert wird, in dieses Gas auszutreten und gleichzeitig aber die Gasbestandteile durch die Membran in das Lösungsmittel hineingelangen können.

5. Verfahren nach einem der vorangegangenen Ansprüche 1 bis 4, **dadurch gekennzeichnet, dass** die Regeneration des Lösungsmittels in zunächst mindestens einem Verfahrensschritt, in dem durch Absenkung des Betriebsdruckes und, optional, Erhöhung der Betriebstemperatur des Lösungsmittels ein Ausgasen gelöster Gase bewirkt wird, nachfolgend einem Rektifikationsschritt und nachfolgend einem weiteren, nicht oberhalb Atmosphärendruck betriebenen Regenerationsschritt durchgeführt wird.

6. Verfahren nach einem der vorangegangenen Ansprüche 1 bis 5, **dadurch gekennzeichnet, dass** die Regeneration des Lösungsmittels in zunächst mindestens 3 Verfahrensschritten, in denen durch Absenkung des Betriebsdruckes und optional Erhöhung der Betriebstemperatur des Lösungsmittels ein Ausgasen gelöster Gase bewirkt wird, nachfolgend einem Rektifikationsschritt und nachfolgend einem weiteren, nicht oberhalb Atmosphärendruck betriebenen Regenerationsschritt durchgeführt wird.

7. Verfahren einem der vorangegangenen Ansprüche 1 bis 6, **dadurch gekennzeichnet, dass** im ersten Regenerationsschritt ein H₂-reiches Gas gewonnen wird.

8. Verfahren nach Anspruch 7, **dadurch gekennzeichnet, dass** das gewonnene H₂₋reiche Gas als NH₃-Synthesegas wiederverwendet wird.

9. Verfahren nach einem der vorangegangenen Ansprüche 1 bis 6, **dadurch gekennzeichnet, dass** im ersten oder zweiten Regenerationsschritt ein CH₄-reiches Gas gewonnen wird.

10. Verfahren nach Anspruch 9, **dadurch gekennzeichnet, dass** das gewonnene CH₄-reiche Gas als Einsatzgas zur Herstellung von NH₃-Synthesegas wiederverwendet wird.

11. Verfahren nach einem der Ansprüche 7 oder 9, **dadurch gekennzeichnet, dass** das gewonnene H₂-reiche Gas und/ oder das gewonnene CH₄-reiche Gas als Heizgas verwendet wird.

12. Verfahren nach Anspruch 6, **dadurch gekennzeichnet, dass** ab dem dritten Regenerationsschritt NH₃-reiches Gas gewonnen wird.

13. Verfahren nach Anspruch 6, **dadurch gekennzeichnet, dass** für die Regeneration Abwärme eingesetzt wird.

14. Verfahren nach Anspruch 6, **dadurch gekennzeichnet, dass** der Brüden des letzten Regenerationsschrittes verdichtet und gemeinsam mit dem Brüden des vorangegangen Regenerationsschrittes kondensiert wird.

15. Verfahren nach Anspruch 14, **dadurch gekennzeichnet, dass** der Brüden des letzten Regenerationsschrittes auf die Saugseite eines Kältemittelverdichters geführt wird.

16. Verfahren nach einem der Ansprüche 1 bis 6, 12, 14 oder 15, **dadurch gekennzeichnet, dass** bei der Regeneration des Lösungsmittels gewonnene NH₃-haltige Gase und Dämpfe gekühlt und verdichtet werden.

17. Verfahren nach Anspruch 16, **dadurch gekennzeichnet, dass** verdichtete NH₃₋Gase und Dämpfe mit kaltem, flüssigen NH₃ gewaschen und **dadurch** von Lösungsmittelresten befreit werden, wobei die erhaltene Lösungsmittel-NH₃-Mischung in einen der vorangegangenen Verfahrensschritte zurückgeführt wird.

18. Verfahren nach Anspruch 10, **dadurch gekennzeichnet, dass** die Regeneration des Lösungsmittels durch Strippung mit Inertgas erreicht oder unterstützt wird.

## Claims

1. Process for the absorptive separation of NH₃ and CH₄ from a gas under high pressure, which at least contains NH₃, H₂, N₂ and CH₄,
**characterised in that** the absorbed components NH₃, H₂, N₂ and CH₄ are separated from the laden solvent in at least two further process steps at different pressure rates using a high-boiling, physically acting and regenerable solvent which contains homologues of alkylene glycol-alkyl-ether and which also may contain water, thereby withdrawing at least one NH₃-rich and at least one CH₄-rich gas fraction from the solvent.

2. Use of the process according to claim 1 in an ammonia production plant.

3. Process according to one of claims 1 or 2,
**characterised in that** the absorption process takes place in the temperature range from -30 °C to +50 °C, preferably in the range from 0 °C up to +40 °C.

4. Process according to one of claims 1 or 2,
**characterised in that** the absorption takes place in at least one contactor or in contactor modules, the solvent being hindered to come into direct contact with the gas, which at least contains NH₃, H₂, N₂ and CH₄, by a diaphragm arranged in between and permeable to the gas components but impermeable to the solvent.

5. Process according to one of claims 1 to 4,
**characterised in that** the regeneration primarily takes place in at least two process steps designed to reduce the operating pressure and, optionally, increase the operating temperature of the solvent so that the dissolved gases are removed. The solvent then flows through a downstream rectification step and then through a downstream regeneration step operated at a pressure that does not exceed the atmospheric pressure.

6. Process according to one of claims 1 to 5,
**characterised in that** the regeneration primarily takes place in at least three process steps designed to reduce the operating pressure and, optionally, increase the operating temperature of the solvent so that the dissolved gases are removed. The solvent then flows through a downstream rectification step and then through a regeneration step operated at a pressure that does not exceed the atmospheric pressure.

7. Process according to one of claims 1 to 6,
**characterised in that** a H₂-rich gas is obtained in the first regeneration step.

8. Process according to claim 7,
**characterised in that** the H₂-rich gas obtained is re-used as NH₃ synthesis gas.

9. Process according to one of claims 1 to 6,
**characterised in that** a CH₄-rich gas is obtained in the first or second regeneration step.

10. Process according to claim 9,
**characterised in that** the CH₄-rich gas obtained is re-used as feed gas for the production of NH₃ synthesis gas.

11. Process according to one of claims 7 or 9,
**characterised in that** the H₂-rich and/ or CH₄-rich gas obtained is exploited as heating agent.

12. Process according to claim 6,
**characterised in that** NH₃-rich gas is obtained from the third regeneration step and so forth.

13. Process according to claim 6,
**characterised in that** waste heat is exploited for regeneration.

14. Process according to claim 6,
**characterised in that** the vapours from the last regeneration step are compressed so that they become condensable together with the vapours of the upstream regeneration step.

15. Process according to claim 14,
**characterised in that** the vapours from the last regeneration step are fed to the intake side of a coolant compressor.

16. Process according to one of claims 1 to 6, 12, 14 or 15,
**characterised in that** NH₃ gases and vapours obtained during the regeneration of the solvent are cooled and compressed.

17. Process according to claim 16,
**characterised in that** compressed NH₃ gases and vapours are scrubbed with the aid of cold, liquid NH₃, thus removing any solvent residues and the NH₃/solvent mixture obtained being recycled to one of the upstream process steps.

18. Process according to claim 10,
**characterised in that** the regeneration of the solvent is obtained or supported by stripping using inert gas.

## Revendications

1. Procédé pour la séparation absorptive de NH₃ et CH₄ d'un gaz sous haute pression, qui doit avoir une teneur en NH₃, H₂, N₂ et CH₄,
**caractérisé en ce que** les composants NH₃, H₂, N₂ et CH₄ sont séparés par absorption du dit gaz, à l'aide d'un solvant qui est régénérable, d'ébullition difficile et d'action physique et qui contient des homologues de l'éther d'alkylène glycole / alkyle et, d'ailleurs, de l'eau, et que les dits composants sont chassés du solvant dans deux étapes de procédé supplémentaires, de telle sorte que, au minimum, une fraction de gaz riche en NH₃ et une autre fraction de gaz riche en CH₄ soient séparées du dit solvant.

2. Utilisation du dit procédé décrit dans la revendication 1 dans une installation de production d'ammoniac.

3. Procédé selon l'une des revendications 1 ou 2,
**caractérisé en ce que** l'absorption a lieu dans la gamme de température de -30 °C à +50 °C, de préférence dans la gamme de 0 °C à +40 °C.

4. Procédé selon l'une des revendications 1 ou 2,
**caractérisé en ce que** l'absorption a lieu, au minimum, dans un appareil contacteur ou des modules contacteurs, de telle sorte que le contact direct entre le solvant et le gaz qui doit avoir une teneur en NH₃, H₂, N₂ and CH₄, soit évité à l'aide d'un membrane intercalé, qui est imperméable au solvant vers le gaz mais perméable aux composants du gaz vers le solvant.

5. Procédé selon l'une des revendication de 1 à 4,
**caractérisé en ce que** la régénération a lieu principalement dans, au minimum, dans deux étapes de procédé prévues pour une réduction de la pression de régime et, comme alternative, pour une augmentation de la température de régime du solvant, de sorte que les gaz dissolus sont dégazés. Le solvant traverse ensuite une étape de rectification disposée en aval et une étape de régénération disposée en aval et foncationnant à une pression qui ne dépasse pas la pression atmosphérique.

6. Procédé selon l'une des revendications de 1 à 5,
**caractérisé en ce que** la régnérération du solvant est d'abord effectuée dans, au moins, trois étapes de procédé dans lesquelles un dégazage des gaz dissolus est réalisé par un abaissement de la pression de régime et, facultativement, par une augmentation de la température du solvant. Une étape de rectification est disposée en aval et suivie par une étape de régénération fonctionnant à une pression qui ne dépasse pas la pression atmosphérique.

7. Procédé selon l'une des revendications de 1 à 6,
**caractérisé en ce que** du gaz riche en H₂ est obtenu dans la première étape de régénération.

8. Procédé selon la revendication 7,
**caractérisé en ce que** le gaz riche en H₂ obtenu est recyclé comme gaz de synchèse NH₃.

9. Procédé selon l'une des revendications de 1 à 6,
**caractérisé en ce que** un gaz riche en CH₄ est obtenu dans la première ou deuxième étape de régénération.

10. Procédé selon la revendication 9,
**caractérisé en ce que** le gaz riche en CH₄ obtenu est recyclé comme gaz d'apport pour la production de gaz de synchèse NH₃ .

11. Procédé selon l'une des revendications 7 ou 9,
**caractérisé en ce que le** gaz riche en H₂ et/ou CH₄ obtenu est utilisé comme agent de chauffage.

12. Procédé selon la revendication 6,
**caractérisé en ce que** le gaz riche en NH₃ est obtenu dans la troisième étape de régénération etc.

13. Procédé selon la revendication 6,
**caractérisé en ce que** la chaleur de sortie est exploité pour la régénération.

14. Procédé selon la revendication 6,
**caractérisé en ce que** les buées provenant de la dernière étape de régénération sont comprimées et ensemble avec les buées provenant des étapes de régénération en amont, ils sont condensées.

15. Procédé selon la revendication 14,
**caractérisé en ce que** les buées provenant de la dernière étape de régénération sont envoyées vers le côté d'aspiration d'un compresseur de l'agent refroidisseur.

16. Procédé selon les revendications de 1 à 6, 12, 14 ou 15,
**caractérisé en ce que** les gaz et buées de NH₃ obtenus lors de la régénération du solvant sont refroidis et comprimés.

17. Procédé selon la revendication 16,
**caractérisé en ce que** les gaz et buées de NH₃ comprimés sont lavés à l'aide d'un liquide NH₃ refroidi pour éliminer le solvant résiduel et recycler ensuite le mélange obtenu de NH₃/ solvant vers une des étapes de procédé en aval.

18. Procédé selon la revendication 10,
**caractérisé en ce que** la régénération du solvant est effectuée ou encouragée par stripping.
